# EUROPÄISCHE PATENTSCHRIFT

(11) **EP 1 619 401 B1**
(45) Veröffentlichungstag und Bekanntmachung des Hinweises auf die Patenterteilung: **24.02.2010**
(21) Anmeldenummer: 05012947.7
(22) Anmeldetag: 16.06.2005
(51) Int. Cl.: F16C 29/06

(54) **Linearführungseinheit**
Linear motion guide unit
Unité de guidage linéaire

(30) Priorität: 21.07.2004 DE 102004035211
(43) Veröffentlichungstag der Anmeldung: 25.01.2006
(73) Patentinhaber: Schaeffler KG, 91074 Herzogenaurach (DE)
(72) Erfinder: Hantke, Stefan, 66280 Sulzbach (DE); Lutz, Peter, 66879 Kottweiler (DE); Menges, Martin, 66424 Homburg (DE)

(56) Entgegenhaltungen:
- EP-A- 0 838 602
- DE-A1- 19 826 703

## Beschreibung

Die vorliegende Erfindung betrifft eine Linearführungseinheit, bei der ein Führungswagen auf einer Führungsschiene über Rollen längsverschieblich gelagert ist. Derartige Linearwälzlager werden beispielsweise im Werkzeugmaschinen- und im Handlingsbereich eingesetzt.

Aus EP 0 838 602 B1 beispielsweise ist eine Linearführungseinheit bekannt geworden, bei der ein Führungswagen an einer Führungsschiene über Rollen längsverschieblich gelagert ist. Eine Rollenkette weist einen die Rollen aufnehmenden Käfig auf. Zwischen einander benachbarten Rollen sind Distanzstücke angeordnet. Zu beiden Stirnseiten der Rollen sind entlang der Rollenkette erstreckte Gurte vorgesehen, die die Distanzstücke miteinander verbinden. Die Rollenkette ist in einem endlosen Rollenkanal der Linearführungseinheit umlauffähig angeordnet. Der Rollenkanal ist gebildet aus einem Lastabschnitt, in dem die Rollen unter Last an Laufbahnen des Führungswagens und der Führungsschiene abwälzen. Ferner weist der Rollenkanal einen Rückführungsabschnitt auf, der im Wesentlichen parallel zum Lastabschnitt angeordnet ist. Die Rollen sind in dem Rückführungsabschnitt unbelastet. Zwei Umlenkabschnitte verbinden den Rückführungsabschnitt und den Lastabschnitt endlos miteinander. Der endlose Rollenkanal weist zu beiden Stirnseiten der Rollen gelegene, zum Führen der Rollen vorgesehene Seitenborde auf. Die Seitenborde sind jeweils mit einer entlang des Seitenbordes angeordneten Nut zur Aufnahme je eines Gurtes des Käfigs ausgerüstet. Die Nut hat einen Nutgrund, eine Nutinnenwand für eine Gurtinnenseite des Gurtes und eine der Nutinnenwand gegenüberliegende Nutaußenwand für eine Gurtaußenseite des Gurtes.

Figur 9 der EP 0 838 602 B1 zeigt im Teillängsschnitt eine Linearführungseinheit, bei der eine Innenumlenkung und eine Außenumlenkung des Umlenkabschnittes an voneinander getrennten Teilen ausgebildet sind. Der Seitenbord ist entlang des Rollenkanals endlos ausgeführt, wobei die Nut in diesen einstückig geformten Teil eingeformt ist. Bei der Herstellung einer derartigen Linearführungseinheit im Spritzverfahren aus Kunststoff ist ein aufwendiges Spritz-' werkzeug erforderlich. Der Führungswagen weist hier einen aus Stahl gebildeten Tragkörper auf, der mit Bohrungen zur Bildung des Rückführungsabschnittes versehen ist. Das Spritzwerkzeug greift auch in diese Bohrung ein. Der Raum zwischen der Bohrungswand und dem eingeführten Teil des Spritzwerkzeuges wird mit Kunststoff ausgespritzt. Es ist schwierig, diesen in die Bohrung eingeführten Teil des Spritzwerkzeuges herauszufahren, ohne die Nut im Umlenkabschnitt zu beschädigen; aufwändige Spritzwerkzeuge sind demzufolge bereitzustellen..

Aufgabe der vorliegenden ist es, eine Linearführungseinheit nach den Merkmalen des Oberbegriffs des Anspruchs 1 anzugeben, die einfach herstellbar ist.

Erfindungsgemäß wird diese Aufgabe dadurch gelöst, dass die Nutaußenwand (18) und die Nutinnenwand (19) der Nut (15) im Umlenkabschnitt an voneinander getrennten Teilen gebildet sind, wobei die Nutinnenwand (19) der Nut (15) des Umlenkabschnittes (13), die Innenumlenkung (21) des Umlenkabschnittes (13), ein innerer Seitenbordteil (14a) des Seitenbordes (14) des Umlenkabschnittes (13) und der Rückführungsabschnitt (12) als eines der Teile aus Kunststoff im Spritzverfahren hergestellt und einstückig miteinander verbunden sind und wobei dieses eine Teil an den Tragkörper im Spritzverfahren angespritzt ist. Das im Rückführungsabschnitt eingesetzte Teil des Spritzwerkzeuges kann problemlos durch gerades Herausfahren dieses Teiles bewerkstelligt werden, ohne dass die Nut im Bereich des Umlenkabschnittes stört. Der Wegfall der Nutaußenwand an diesem Teil des Führungswagens macht dieses einfache Herausfahren möglich.

Es wurde bereits erwähnt, dass bei der bekannten Linearführungseinheit eine Innenumlenkung und eine Außenumlenkung des Umlenkabschnittes an voneinander getrennten Teilen ausgebildet sind. Es wird in erfindungsgemäßer Weiterbildung vorgeschlagen, dass die Außenumlenkung eine eines der Teile bildende Umlenkschale aufweist, die mit der Nutaußenwand der Nut des Umlenkabschnittes versehen ist. Diese Umlenkschale kann separat hergestellt werden und auf den Führungswagen aufgesetzt werden, um den endlosen Rollenkanal zu vervollständigen. Auch bei dieser erfindungsgemäßen Weiterbildung kann ein in der Bohrung des Rückführungsabschnittes eingesetzter Teil des Spritzwerkzeuges problemlos herausgefahren werden.

Diese Umlenkschale kann zusätzlich zu der Nutaußenwand auch den Nutgrund der Nut aufweisen. Ebenso kann die Umlenkschale in zweckmäßiger Weise eine äußere Umlenkbahn für die Rollen aufweisen. Die Umlenkschale ist dann für den Bereich des Umlenkabschnittes mit der Nutaußenwand, dem Nutgrund und der äußeren Umlenkbahn für die Rollen versehen. Diese Umlenkschale kann in günstiger Weise im Spritzverfahren in einem Spritzwerkzeug hergestellt werden.

Die Nut teilt den Seitenbord in den inneren Seitenbordteil und in einen äußeren Seitenbordteil. In günstiger Weise kann die Außenschale den äußeren Seitenbordteil des Seitenbordes aufweisen. An der Umlenkschale können somit in einem einzigen Verfahrensschritt wesentliche Führungsflächen für die Rollenkette hergestellt werden. Der Nutgrund, die Nutaußenwand der Nut, die äußere Umlenkbahn und der äußere Seitenbordteil des Seitenbordes können demzufolge einstückig an die Umlenkschale angeformt sein.

Der Tragkörper des Führungswagens ist üblicherweise stirnseitig mit Kappen versehen, die die Umlenkschalen aufweisen. Der Tragkörper kann gemeinsam mit den Kappen den Führungswagen bilden.

Nachstehend wird die Erfindung anhand eines in insgesamt 8 Figuren abgebildeten Ausführungsbeispieles näher erläutert. Es zeigen:
- Figur 1: einen Querschnitt durch eine erfindungsgemäße Linearführungseinheit,
- Figur 2: eine Draufsicht auf die erfindungsgemäße Linearführungseinheit aus in Figur 1,
- Figur 3: einen Teillängsschnitt durch die erfindungsgemäße Linearführungseinheit,
- Figur 4: in vergrößerter Darstellung einen Ausschnitt des Querschnittes gemäß Figur 1,
- Figur 5: den Teillängsschnitt aus Figur 3, in vergrößerter Darstellung mit getrennt abgebildeten Elementen,
- Figur 6: einen Längsschnitt wie in Figur 5, jedoch mit einer abgewandelten erfindungsgemäßen Linearführungseinheit,
- Figur 7: einen Längsschnitt wie in den Figuren 5 und 6, jedoch mit einer weiteren modifizierten Linearführungseinheit und
- Figur 8: einen Teillängsschnitt wie in Figur 7, jedoch in perspektivischer Darstellung.

### Ausführliche Beschreibung der Zeichnung

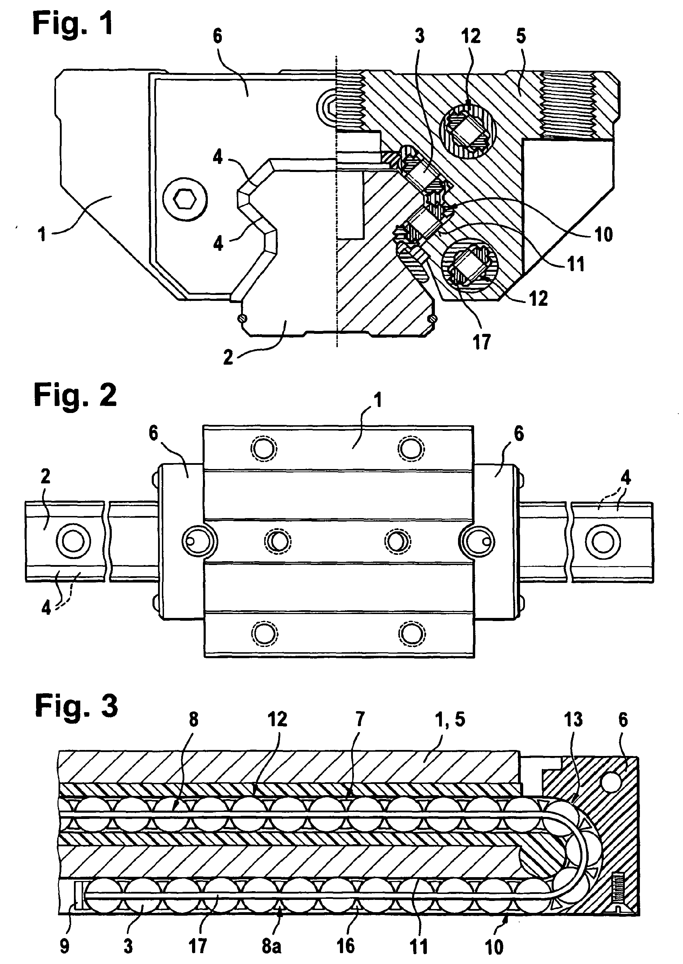

Figur 1 zeigt im Querschnitt eine erfindungsgemäße Linearführungseinheit. Ein Führungswagen 1 ist an einer Führungsschiene 2 über Rollen 3 längsverschieblich gelagert. Die Führungsschiene 2 weist an ihren beiden Längsseiten jeweils zwei etwa rechtwinklig aufeinander stehende Laufbahnen 4 für die Rollen 3 auf. Figur 2 zeigt diese Linearführungseinheit in einer Draufsicht.

In Figur 3 ist abgebildet, dass der Führungswagen 1 einen Tragkörper 5 und in Laufrichtung stirnseitig angeordnete Kappen 6 aufweist. Figur 3 zeigt im Längsschnitt einen endlosen Rollenkanal 7, in dem eine Rollenkette 8 endlos umlauffähig angeordnet ist. Die Rollenkette 8 ist vorliegend mit zwei einander gegenüberliegenden Enden 9 versehen, wobei in Figur 3 eines dieser Enden 9 zu erkennen ist. Der Rollenkanal 7 ist gebildet aus einem Lastabschnitt 10, in dem die Rollen 3 unter Last einerseits an den Laufbahnen 4 der Führungsschiene 2 und andererseits an Laufbahnen 11 des Führungswagens 1 abwälzen. Ferner umfasst der endlose Rollenkanal 7 einen zu dem Lastabschnitt 10 im Wesentlichen parallel angeordneten Rückführungsabschnitt 12, in dem die Rollen 3 der Rollenkette 8 unbelastet sind. Ferner umfasst der endlose Rollenkanal 7 zwei Umlenkabschnitte 13, von denen einer in der Figur 3 abgebildet ist. Die Umlenkabschnitte 13 verbinden den Rückführungsabschnitt 12 und den Lastabschnitt 10 endlos miteinander. Der endlose Rollenkanal 7 umfasst ferner zu beiden Stirnseiten der Rollen 3 gelegene Seitenborde 14, an denen die Rollen 3 geführt sind. Diese Seitenborde 14 sind an allen Abschnitten des Rollenkanals 7 ausgebildet.

Der Käfig 8a weist Distanzstücke 16 auf, die jeweils zwischen zwei einander benachbarten Rollen 3 angeordnet sind. Diese Distanzstücke 16 sind in Figur 3 zu erkennen. Zu beiden Stirnseiten der Rollen 3 ist jeweils ein Gurt 17 der Rollenkette 8 entlang des Rollenkanals 7 angeordnet, wobei die Gurte 17 die Distanzstücke 16 einstückig miteinander verbinden. Die Gurte 17 sind in den Figuren 1 und 3 abgebildet. Der Gurt 17 hat eine Gurtaußenseite und eine Gurtinnenseite, wobei die Gurtaußenseite am Außenumfang der endlosen Rollenkette 8 ist und wobei die Gurtinnenseite am Innenumfang der Rollenkette 8 angeordnet ist.

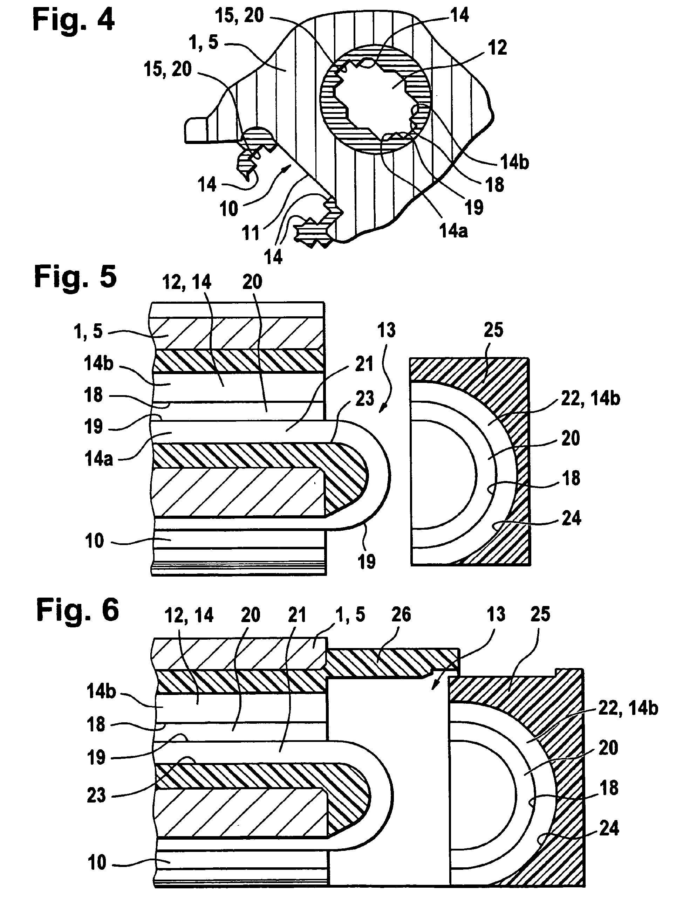

In Figur 4 ist abgebildet, dass der für die Rollen 3 vorgesehene Seitenbord 14 mit einer Nut 15 versehen ist. In der Darstellung ist der im Rückführungsabschnitt 12 und der im Lastabschnitt 10 gelegene Teil des Seitenbordes 14 mit der Nut 15 abgebildet. Die Nut 15 ist zur Aufnahme eines Gurtes 17 des Käfigs 8a vorgesehen. Die Nut 15 weist eine Nutaußenwand 18 und eine Nutinnenwand 19 auf. Der Gurt 17 ist mit seiner Gurtinnenseite an der Nutinnenwand 19 der Nut 15 geführt. Der Gurt 17 ist mit seiner Gurtaußenseite an der Nutaußenwand 18 der Nut 15 geführt. Die Nut 15 weist ferner einen Nutgrund 20 auf. Der Figur 4 ist ferner zu entnehmen, dass die Nut 15 den Seitenbord 14 in einem inneren Seitenbordteil 14a und einen äußeren Seitenbordteil 14b teilt.

Figur 5 zeigt im Teillängsschnitt die erfindungsgemäße Linearführungseinheit, wobei hier der Umlenkabschnitt 13 in allen Einzelheiten abgebildet ist. Der Umlenkabschnitt 13 umfasst eine Innenumlenkung 21 und eine Außenumlenkung 22. Die Innenumlenkung ist mit einer inneren Umlenkbahn 23 für die Rollen 3 versehen. Die Außenumlenkung 22 ist mit einer äußeren Umlenkbahn 24 für die Rollen 3 versehen. Die Außenumlenkung 22 ist hier durch eine aus Kunststoff im Spritzverfahren gebildete Umlenkschale 25 gebildet.

An der Umlenkschale 25 ist sowohl die äußere Umlenkbahn 24 für die Rollen 3, sowie der äußere Seitenbordteil 14b für die Rollen 3, sowie die Nutaußenwand 18 und der Nutgrund 20 einstückig angeformt.

An dem Tragkörper 5 ist die Innenumlenkung 21 gemeinsam mit dem Rücklaufabschnitt 12 und den Seitenborden 14 des Lastabschnittes 10 aus Kunststoff einstückig im Spritzverfahren angeformt. Der Figur 5 ist deutlich zu entnehmen, dass die Nutinnenwand 19 mit dem inneren Seitenbordteil 14a endlos umlaufend ausgebildet ist. Der Nutgrund 20 und die Nutaußenwand 18 enden hingegen am Ende des Tragkörpers 5. Wenn die Umlenkschale 25 auf den Tragkörper 5 aufgesetzt ist, ist der endlose Rollenkanal 7 vollständig ausgebildet.

Bei dieser erfindungsgemäßen Rollenumlaufeinheit kann das Spritzwerkzeug aus dem Rücklaufabschnitt 12 und aus dem Lastabschnitt 10 und aus dem Bereich des Umlenkabschnitts 13 problemlos nach Beendigung des Spritzvorganges ausgefahren werden. Besondere Zerfallsschieber sind hier nicht erforderlich.

Figur 6 zeigt im Teilschnitt eine weitere erfindungsgemäße Linearführungseinheit. Im Unterschied zu der weiter oben beschriebenen erfindungsgemäße Linearführungseinheit ist hier am Tragkörper 5 ein Zentrieransatz 26 vorgesehen, in den die Umlenkschale 23 hineingeführt werden kann, wobei die Umlenkschale 25 an dem Zentrieransatz 26 zentriert ist.

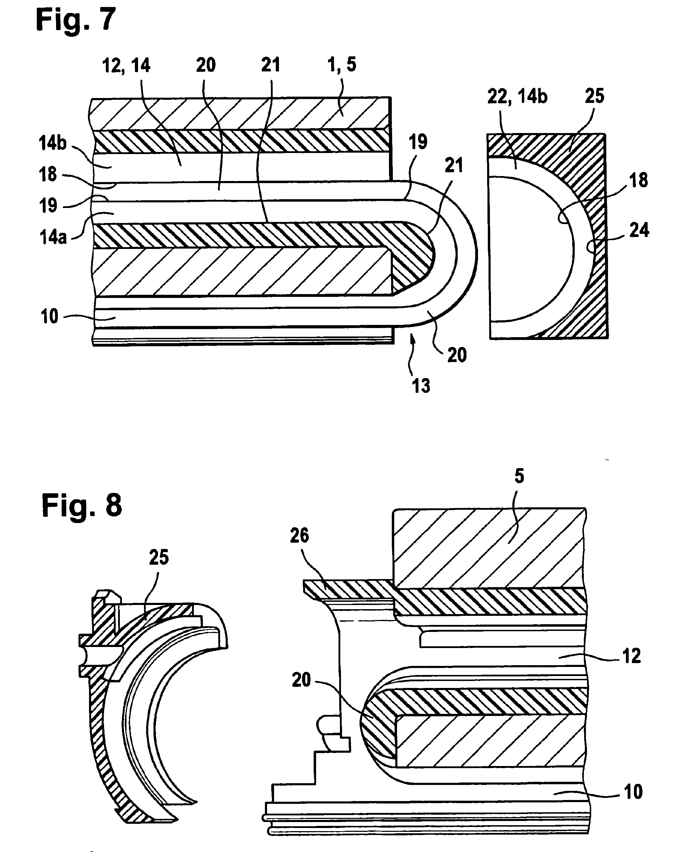

Figur 7 zeigt eine weitere erfindungsgemäße Variante einer Linearführung, die sich durch die Linearführung gemäß den Figuren 1-5 im Wesentlichen dadurch unterscheidet, dass die Umlenkschale 25 lediglich mit der äußeren Umlenkbahn 24, dem äußeren Seitenbordteil 14b und mit der Nutaußenwand 18 versehen ist. Der Nutgrund 20 ist einstückig an die Innenumlenkung 13 angeformt.

Figur 8 zeigt eine perspektivische Darstellung der erfindungsgemäßen Linearführungseinheit aus Figur 7. In dieser Figur ist anschaulich der Zentrieransatz 26 dargestellt, an dem die Umlenkschale 25 zentriert wird.

### Bezugszeichen

- 1: Führungswagen
- 2: Führungsschiene
- 3: Rolle
- 4: Laufbahn
- 5: Tragkörper
- 6: Kappe
- 7: Rollenkanal
- 8: Rollenkette
- 8a: Käfig
- 9: Ende
- 10: Lastabschnitt
- 11: Laufbahn
- 12: Rückführungsabschnitt
- 13: Umlenkabschnitt
- 14: Seitenbord
- 14a: innerer Seitenbordteil
- 14b: äußerer Seitenbordteil
- 15: Nut
- 16: Distanzstück
- 17: Gurt
- 18: Nutaußenwand
- 19: Nutinnenwand
- 20: Nutgrund
- 21: Innenumlenkung
- 22: Außenumlenkung
- 23: innere Umlenkbahn
- 24: äußere Umlenkbahn
- 25: Umlenkschale
- 26: Zentrieransatz

## Patentansprüche

1. Linearführungseinheit, mit einem einen Tragkörper aufweisenden Führungswagen (1), der an einer Führungsschiene (2) über Rollen (3) längsverschieblich gelagert ist, wobei eine Rollenkette (8) einen die Rollen (3) aufnehmenden Käfig (8a) aufweist, der gebildet ist aus zwischen einander benachbarten Rollen (3) angeordneten Distanzstücken (16) und zu beiden Stirnseiten der Rollen (3) angeordneten, die Distanzstücke (16) miteinander verbindenden flexiblen Gurten (17), wobei die Rollenkette (8) in einem endlosen Rollenkanal (7) umlauffähig angeordnet ist, der gebildet ist aus einem Lastabschnitt (10), in dem die Rollen (3) unter Last an Laufbahnen (4, 11) des Führungswagens (1) und der Führungsschiene (2) abwälzbar sind, und aus einem zu dem Lastabschnitt (10) im Wesentlichen parallel angeordneten Rückführungsabschnitt (12), in dem die Rollen (3) der Rollenkette (8) unbelastet sind, und aus zwei Umlenkabschnitten (13), die den Rückführungsabschnitt (12) und den Lastabschnitt (10) endlos miteinander verbinden, und wobei der endlose Rollenkanal (7) zu beiden Stirnseiten der Rollen (3) gelegene, zum Führen der Rollen (3) vorgesehene Seitenborde (14) aufweist, welche Seitenborde (14) jeweils mit einer Nut (15) zur Aufnahme je eines Gurtes (17) des Käfigs (8a) versehen sind, wobei die Nut (15) einen Nutgrund (20), eine Nutinnenwand (19) für eine Gurtinnenseite des Gurtes (17) und eine der Nutinnenwand gegenüberliegende Nutaußenwand (18) für eine Gurtaußenseite des Gurtes (17) aufweist, wobei eine Innenumlenkung (21) und eine Außenumlenkung (22) des Umlenkabschnittes (13) an voneinander getrennten Teilen ausgebildet sind, **dadurch gekennzeichnet, dass** die Nutaußenwand (18) und die Nutinnenwand (19) der Nut (15) im Umlenkabschnitt an voneinander getrennten Teilen gebildet sind, wobei die Nutinnenwand (19) der Nut (15) des Umlenkabschnittes (13), die Innenumlenkung (21) des Umlenkabschnittes (13), ein innerer Seitenbordteil (14a) des Seitenbordes (14) des Umlenkabschnittes (13) und der Rückführungsabschnitt (12) als eines der Teile aus Kunststoff im Spritzverfahren hergestellt und einstückig miteinander verbunden sind und wobei dieses eine Teil an den Tragkörper im Spritzverfahren angespritzt ist.

2. Linearführungseinheit nach Anspruch 1, bei der die Außenumlenkung (22) eine das andere Teil bildende Umlenkschale (25) aufweist, die mit der Nutaußenwand (18) der Nut (15) des Umlenkabschnittes (13) versehen ist.

3. Linearführungseinheit nach Anspruch 2, bei der die Umlenkschale (25) den Nutgrund (20) der Nut (15) aufweist.

4. Linearführungseinheit nach Anspruch 2, bei der die Umlenkschale (25) eine äußere Umlenkbahn (24) für die Rollen (3) aufweist.

5. Linearführungseinheit nach Anspruch 1, bei der die Nut (15) den Seitenbord (14) teilt in den inneren Seitenbordteil (14a) und in einen äußeren Seitenbordteil (14b).

6. Linearführungseinheit nach Anspruch 5, bei der die Umlenkschale (25) den äußeren Seitenbordteil (14b) des Seitenbordes (14) aufweist.

7. Linearführungseinheit nach Anspruch 2, bei der die Umlenkschale (25) aus Kunststoff im Spritzverfahren hergestellt ist.

8. Linearführungseinheit nach Anspruch 7, bei der der Nutgrund (20) und die Nutaußenwand (18) der Nut (15) und die äußere Umlenkbahn (24) einstückig angeformt sind.

## Claims

1. Linear guide unit, comprising a guide carriage (1) which has a carrier body and which is mounted in a longitudinally displaceable manner on a guide rail (2) via rollers (3), wherein a roller chain (8) comprises a cage (8a) which accommodates the rollers (3) and which is formed from spacers (16) arranged between mutually adjacent rollers (3), and flexible belts (17) which are arranged at both end faces of the rollers (3) and which connect the spacers (16) to one another, wherein the roller chain (8) is arranged rotatably in an endless roller channel (7) which is formed from a load section (10), in which the rollers (3) are able to roll under load on raceways (4, 11) of the guide carriage (1) and the guide rail (2), and from a return section (12) which is arranged substantially parallel to the load section (10) and in which the rollers (3) of the roller chain (8) are unloaded, and from two deflecting sections (13) which endlessly interconnect the return section (12) and the load section (10), and wherein the endless roller channel (7) has lateral rims (14) situated at both end faces of the rollers (3) and intended for guiding the rollers (3), which lateral rims (14) are each provided with a groove (15) for accommodating a respective belt (17) of the cage (8a), wherein the groove (15) has a groove bottom (20), a groove inner wall (19) for an inner side of the belt (17) and a groove outer wall (18) situated opposite the groove inner wall and intended for an outer side of the belt (17), wherein an inner deflection (21) and an outer deflection (22) of the deflecting section (13) are formed on parts separate from one another, **characterized in that** the outer wall (18) and the inner wall (19) of the groove (15) are formed in the deflecting section on parts separate from one another, wherein the inner wall (19) of the groove (15) of the deflecting section (13), the inner deflection (21) of the deflecting section (13), an inner lateral rim part (14a) of the lateral rim (14) of the deflecting section (13) and the return section (12) are produced as one of the parts from plastic by injection moulding and are connected to one another in one piece, and wherein this one part is moulded onto the carrier body by injection moulding.

2. Linear guide unit according to Claim 1, in which the outer deflection (22) comprises a deflecting shell (25) which forms the other part and which is provided with the outer wall (18) of the groove (15) of the deflecting section (13).

3. Linear guide unit according to Claim 2, in which the deflecting shell (25) comprises the bottom (20) of the groove (15).

4. Linear guide unit according to Claim 2, in which the deflecting shell (25) has an outer deflecting path (24) for the rollers (3).

5. Linear guide unit according to Claim 1, in which the groove (15) divides the lateral rim (14) into the inner lateral rim part (14a) and into an outer lateral rim part (14b).

6. Linear guide unit according to Claim 5, in which the deflecting shell (25) comprises the outer lateral rim part (14b) of the lateral rim (14).

7. Linear guide unit according to Claim 2, in which the deflecting shell (25) is produced from plastic by injection moulding.

8. Linear guide unit according to Claim 7, in which the bottom (20) and the outer wall (18) of the groove (15) and the outer deflecting path (24) are formed in one piece.

## Revendications

1. Unité de guidage linéaire avec un chariot de guidage (1) présentant un corps porteur, chariot qui est monté en mouvement longitudinal sur un rail de guidage (2) au moyen de rouleaux (3), dans laquelle une chaîne de rouleaux (8) comporte une cage (8a) contenant les rouleaux (3), qui est formée par des pièces d'écartement (16) disposées entre des rouleaux (3) voisins les uns des autres et par des courroies flexibles (17) reliant les pièces d'écartement (16) les unes aux autres et disposées vers les deux faces frontales des rouleaux (3), dans laquelle la chaîne de rouleaux (8) est disposée en mouvement de circulation dans un canal de rouleaux sans fin (7), qui est formé par une section de charge (10) dans laquelle les rouleaux (3) peuvent rouler sous charge sur des chemins de roulement (4, 11) du chariot de guidage (1) et du rail de guidage (2), et par une section de retour (12) essentiellement parallèle à la section de charge (10), et dans laquelle les rouleaux (3) de la chaîne de rouleaux (8) ne sont pas chargés, et par deux sections de déviation (13), qui relient sans fin l'une à l'autre la section de retour (12) et la section de charge (10), et dans laquelle le canal de rouleaux sans fin (7) présente des bords latéraux (14) prévus pour guider les rouleaux (3) et situés vers les deux faces frontales des rouleaux (3), bords latéraux (14) qui sont chacun pourvus d'une rainure (15) pour recevoir chacun une courroie (17) de la cage (8a), dans laquelle la rainure (15) présente un fond de rainure (20), une paroi intérieure de rainure (19) pour un côté intérieur de courroie de la courroie (17) et une paroi extérieure de rainure (18) opposée à la paroi intérieure de rainure pour un côté extérieur de courroie de la courroie (17), dans laquelle une déviation intérieure (21) et une déviation extérieure (22) de la section de déviation (13) sont formées sur des parties séparées l'une de l'autre, **caractérisée en ce que** la paroi extérieure de rainure (18) et la paroi intérieure de rainure (19) de la rainure (15) dans la section de déviation sont formées sur des parties séparées l'une de l'autre, dans laquelle la paroi intérieure de rainure (19) de la rainure (15) de la section de déviation (13), la déviation intérieure (21) de la section de déviation (13), une partie de bord latéral intérieure (14a) du bord latéral (14) de la section de déviation (13) et la section de retour (12) sont fabriqués sous la forme d'une des pièces en plastique par un procédé de projection et sont reliés d'une seule pièce les uns aux autres et dans laquelle cette pièce unique est formée par projection sur le corps porteur par un procédé de projection.

2. Unité de guidage linéaire selon la revendication 1, dans laquelle la déviation extérieure (22) comprend une coquille de déviation (25) formant l'autre pièce, et est pourvue de la paroi extérieure de rainure (18) de la rainure (15) de la section de déviation (13).

3. Unité de guidage linéaire selon la revendication 2, dans laquelle la coquille de déviation (25) présente le fond de rainure (20) de la rainure (15).

4. Unité de guidage linéaire selon la revendication 2, dans laquelle la coquille de déviation (25) présente un chemin de déviation extérieur (24) pour les rouleaux (3).

5. Unité de guidage linéaire selon la revendication 1, dans laquelle la rainure (15) divise le bord latéral (14) en une partie de bord latéral intérieure (14a) et une partie de bord latéral extérieure (14b).

6. Unité de guidage linéaire selon la revendication 5, dans laquelle la coquille de déviation (25) comprend la partie de bord latéral extérieure (14b) du bord latéral (14).

7. Unité de guidage linéaire selon la revendication 2, dans laquelle la coquille de déviation (25) est fabriquée en plastique par un procédé de projection.

8. Unité de guidage linéaire selon la revendication 7, dans laquelle le fond de rainure (20) et la paroi extérieure de rainure (18) de la rainure (15) et le chemin de déviation extérieur (24) sont formés en une seule pièce.
